# EUROPEAN PATENT APPLICATION

(11) **EP 1 548 648 A1**
(43) Date of publication of application: **29.06.2005**
(21) Application number: 03791192.2
(22) Date of filing: 04.08.2003
(51) Int. Cl.: G06T 15/70, H04N 13/00

(54) **CONTENT REPRODUCTION DEVICE CAPABLE OF REPRODUCING A CONTENT IN OPTIMAL REPRODUCTION MODE**

(30) Priority: 27.08.2002 JP 2002246602
(71) Applicant: Sharp Kabushiki Kaisha, Osaka-shi, Osaka 545-8522 (JP)
(72) Inventor: NAKANISHI, Masahiro, Tenri-shi, Nara 632-0004 (JP)
(74) Representative: Brown, Kenneth Richard
(86) International application number: PCT/JP2003/009895
(87) International publication number: WO 2004/021285

(57) **Abstract**

When contents which are an animation are downloaded (S101), a contents reproduction terminal identifies whether or not each object, such as a figure (polygon), an image or text, which is included in the contents is a 3-D (stereoscopic) object that includes deepness information on the depth of the object (S103). Thus, it is determined from the results of the identification of these whether or not these contents are an animation that can be reproduced in a 3-D reproduction mode on the basis of a condition for the reproduction mode of the contents of each reproduction apparatus (S105), and a flag that indicates this reproduction mode is set and stored in this reproduction apparatus (S107, 111). Furthermore, the stored contents are displayed by means of an icon that indicates this reproduction mode (S109, 113).

## Description

### Technical Field

The present invention relates to a contents reproduction apparatus, a method for identifying contents, a method for reproducing contents, a program product for identifying contents and a program product for reproducing contents, and in particular, to a contents reproduction apparatus, a method for identifying contents, a method for reproducing contents, a program product for identifying contents and a program product for reproducing contents where contents are automatically identified and contents can be reproduced in the optimal reproduction mode.

### Background Art

There is a contents reproduction apparatus, such as that of a cellular phone, where a contents reproduction mode in a flat display (hereinafter referred to as 2-D mode) and a contents reproduction mode in a stereoscopic display (hereinafter referred to as 3-D mode) are switched and implemented on a display in accordance with the contents.

Japanese Patent Laying-Open No. 08-240790, for example, discloses an automatic stereoscopic display apparatus which has an optical system that is arranged so that an image of a first polarization light source is generated in a first observation zone and an image of a second light source is generated in a second observation zone, a spatial light modulator (SLM) that has a plurality of pixels arranged so as to modify light from the light sources, and a plurality of polarization adjusters, each of which is optically aligned with at least one pixel, wherein the above-described polarization adjusters make stereoscopic display possible by being separated into a first group where polarization adjusters are arranged so as to allow light of the first polarization to transmit and light of the second polarization to be substantially prevented from transmitting, and a second group where polarization adjusters are arranged so as to allow light of the second polarization to transmit and light of the first polarization to be substantially prevented from transmitting, in a manner where the image on the SLM that can be observed from the first observation zone is an image made of pixels which are optically aligned with the polarization adjusters in the first group, and the image that can be observed from the second observation zone is an image made of pixels which are aligned with the polarization adjusters in the second group.

Furthermore, Japanese Patent Laying-Open No. 10-260376 discloses a two-dimensional image/three-dimensional image compatible display apparatus where a two-dimensional image and a three-dimensional image can be switched to be displayed by providing a liquid crystal panel that is formed of an image-displaying liquid crystal layer for displaying a three-dimensional image or a two-dimensional image, a dispersion-type liquid crystal layer which disperses light from a spectroscope when the image-displaying liquid crystal layer displays a two-dimensional image, and which disperses light from the spectroscope when the image-displaying liquid crystal layer displays a three-dimensional image, and an intervening insulating layer.

However, in a contents reproduction apparatus that uses the automatic stereoscopic display apparatus that is disclosed in Japanese Patent Laying-Open No. 08-240790 or the two-dimensional image/three-dimensional image compatible displaying apparatus that is disclosed in Japanese Patent Laying-Open No. 10-260376, optimal reproduction of the contents may not be implemented, or reproduction may be impossible in the case where the reproduction mode of the contents and the reproduction mode of the contents reproduction apparatus are incompatible. Therefore, a problem arises where, inconveniently, the user needs to select the optimal reproduction mode whenever contents are reproduced in such a contents reproduction apparatus.

In addition, a problem also arises when a reproduction mode is mistakenly selected, where reproduction of contents occurs in the wrong mode, in a manner where, for example, reproduction of contents that include letters in 3-D is carried out in a contents reproduction apparatus that cannot carry out 3-D display of letters in 3-D mode.

The present invention is provided in order to solve such problems, and an object thereof is to provide a contents reproduction apparatus, a method for identifying contents, a method for reproducing contents, a program product for identifying contents and a program product for reproducing contents where contents are automatically identified and contents can be reproduced in the optimal reproduction mode.

### Disclosure of the Invention

In order to solve the above-described problems, the present invention provides a contents reproduction apparatus as shown in the following.

A contents reproduction apparatus includes a contents reproduction part which can reproduce contents in a plurality of reproduction modes, including three-dimensional display, a recognition part which recognizes the attributes of an object that is included in the contents, a determination part which determines the reproduction mode of the contents on the basis of the conditions for the contents which are to be reproduced and the attributes of the objects that have been recognized by the recognition part, and a control part which controls switching between the plurality of reproduction modes on the basis of the reproduction mode that has been determined by the determination part. Herein, the contents reproduction part reproduces said contents in the reproduction mode that has been switched by the control part.

In addition, in order to solve the above-described problems, a contents reproduction apparatus as shown in the following is also provided.

A contents reproduction apparatus includes a contents reproduction part which can reproduce contents in a plurality of reproduction modes, including three-dimensional display, an acquisition part which acquires information concerning the reproduction mode of the contents, a determination part which determines the reproduction mode of the contents on the basis of information concerning the reproduction mode of the contents that have been acquired by the acquisition part, and a control part which controls switching between the plurality of reproduction modes during the reproduction of the contents in the contents reproduction part on the basis of the reproduction mode that has been determined by the determination part.

In addition, in order to solve the above-described problems, a contents identification method as shown in the following is provided.

A contents identification method for identifying the reproduction mode of contents that include an object includes a recognition step of recognizing the attributes of an object, and a determination step of determining the reproduction mode of the contents on the basis of the conditions for the contents which are to be reproduced and the recognition of the recognition step.

In addition, in order to solve the above-described problems, a contents reproduction method as shown in the following is provided.

A contents reproduction method for reproducing contents to which information concerning the reproduction mode has been added includes a switching step of switching the reproduction mode of a reproduction apparatus for reproducing contents on the basis of the information concerning the reproduction mode that has been added to the contents, and a reproduction step of reproducing contents in the switched reproduction mode.

In addition, in order to solve the above-described problems, a program product as shown in the following is provided.

A contents identification program product which allows a computer to execute a contents identification method for identifying the reproduction mode for the contents that includes an object allows a computer to execute a recognition step of recognizing the attributes of an object, and a determination step of determining the reproduction mode of the contents on the basis of the conditions for the contents which are to be reproduced and the recognition of the identification step.

In addition, in order to solve the above-described problems, a program product as shown in the following is also provided.

A contents reproduction program product which allows a computer to execute a contents reproduction method for reproducing contents to which information concerning the reproduction mode has been added are reproduced allows a computer to execute a switching step of switching the reproduction mode of a reproduction apparatus for reproducing contents on the basis of the information concerning the reproduction mode that has been added to the contents, and a reproduction step of reproducing contents in the switched reproduction mode.

### Brief Description of the Drawings

Fig. 1 is a diagram showing the configuration of a contents reproduction terminal 1 according to a first embodiment.
Fig. 2 is a flowchart showing the processing for registering and reproducing a downloaded animation in contents reproduction terminal 1.
Fig. 3 is a flowchart showing the processing for registering animation data.
Figs. 4A, 4B and 12 are diagrams showing concrete examples of animations.
Figs. 5 and 17 are diagrams showing concrete examples of the configuration of animation data according to the first embodiment and a second embodiment.
Fig. 6 is a flowchart showing the processing for determining whether animation data is 2-D data or 3-D data.
Fig. 7 is a diagram showing a concrete example of a table for contents identification.
Fig. 8 is a diagram showing a concrete example of a library display.
Fig. 9 is a diagram showing a concrete example of a data format of an animation that is registered in contents reproduction terminal 1.
Figs. 10 and 21 are flowcharts showing the reproduction processing of animation data in contents reproduction terminal 1 according to the first and fifth embodiments.
Fig. 11 is a diagram showing a mechanism for the display of a stereoscopic image on display part 107.
Fig. 13 is a diagram showing a concrete example of the attributes of animation data.
Fig. 14 is a diagram showing a concrete example of conditions of animation contents that can be reproduced in contents reproduction terminal 1 according to the first embodiment.
Figs. 15A and 15B are diagrams showing a concrete example of a reproduction mode of an animation in contents reproduction terminal 1 according to the first embodiment.
Fig. 16 is a diagram showing the attributes of an object and the conditions of the reproduction mode for reproduction at the time when an animation is reproduced in contents reproduction terminal 1 according to the first embodiment in 2-D mode and in 3-D mode.
Fig. 18 is a diagram showing a concrete example of a time reproduction mode switching information table.
Figs. 19 and 20 are diagrams showing concrete examples of reproduction modes of animation data in contents reproduction terminal 1 according to the third and fourth embodiments.
Fig. 22 is a diagram showing a concrete example of a reproduction mode for animation data in the case where the base station is in the communication range at the time of the contents reproduction according to the conditions for reproduction.
Figs. 23A and 23B are diagrams showing concrete examples of reproduction modes of animation data in the case where information is shown at the time when reproduction of contents is carried out according to the conditions for reproduction.
Figs. 24 and 25 are flowcharts showing reproduction processing of animation data in contents reproduction terminal 1 in the case where a portion of contents data cannot be reproduced.

### Best Modes for Carrying Out the Invention

In the following, the embodiments of the present invention are described with reference to the drawings. The same symbols are attached to the same parts and components in the following description. Their names and functions are also the same. Accordingly, the detailed descriptions of these are not repeated.

### First Embodiment

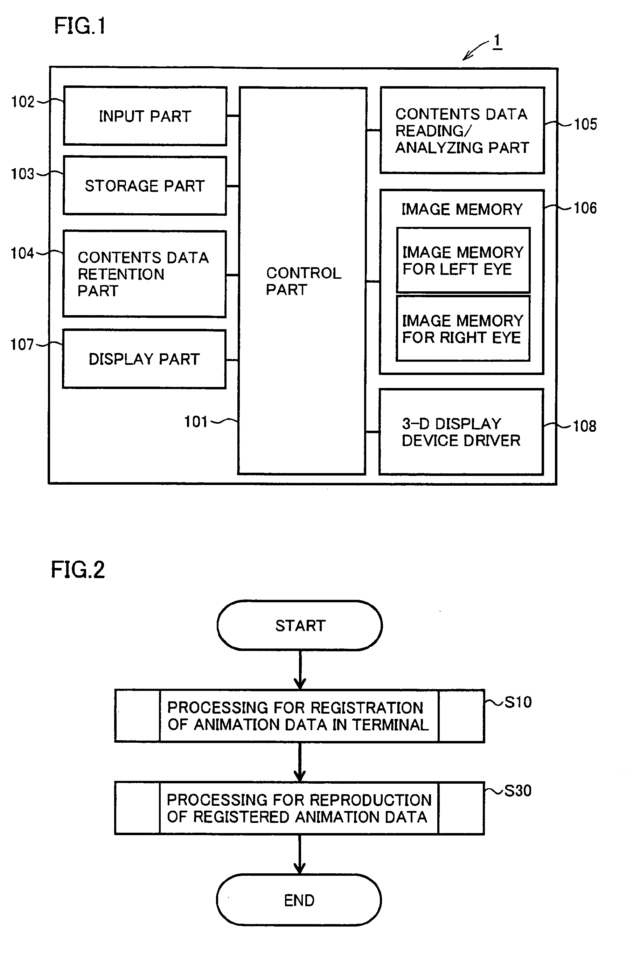

Fig. 1 is a diagram showing a concrete example of the configuration of a contents reproduction terminal 1 where contents data is downloaded and reproduced according to the first embodiment. Though contents reproduction terminal 1 is described as a cellular phone according to the first embodiment, it is not limited to a cellular form, but rather, may be a PDA (Personal Digital Assistant) or another communication terminal. In addition, it may be a personal computer. Here, a communicator (not shown) of contents reproduction terminal 1 does not directly relate to the present invention, and therefore, whether or not contents reproduction terminal 1 communicates via a network or the like in the communicator is not mentioned.

With reference to Fig. 1, contents reproduction terminal 1 according to the first embodiment includes a control part 101, which is formed of a CPU (Central Processing Unit) or the like, for controlling the entirety of contents reproduction terminal 1, an input part 102 for accepting an input or the like of contents data, a storage part 103, which is formed a ROM (Read Only Memory), a RAM (Random Access Memory) or the like, for storing a program or the like that is implemented by control part 101, a contents data retention part 104 for retaining contents data that has been inputted from input part 102, a contents data reading/analyzing part 105 for reading in and analyzing the inputted contents data, an image memory 106 which is a memory for storing the results of analysis and which is formed of an image memory for the left eye and an image memory for the right eye for stereoscopic display, a display part 107 formed of a display or the like, and a 3-D display device driver 108 that is a program for managing display part 107 for stereoscopic (3-D) display on display part 107.

Display part 107 of contents reproduction terminal 1 according to the present embodiment is characterized by being allowed for two types of display, 2-D (flat) display and 3-D (stereoscopic) display, and able to switch between the two if necessary. Switching between the 2-D (flat) display and the 3-D (stereoscopic) display can be carried out by using a conventional switching method. Concretely speaking, 3-D display is made possible by using a technology such as that which has been disclosed in Japanese Patent Laying-Open No. 08-240790, and switching between 2-D display and 3-D display can be made possible by using a technology such as that which has been disclosed in Japanese Patent Laying-Open No. 10-260376.

Here, contents reproduction terminal 1, which is a cellular phone according to the present embodiment, includes components which are necessary for implementing cellular phone functions, such as a communicator and a speaker or the like, not shown, in addition to the components shown in Fig. 1. In addition, inputs into input part 102 include inputs of data that is received at the communicator, not shown, in addition to inputs that use the above-described buttons or the like.

According to the first embodiment, the contents that have been downloaded are registered and reproduced in the above-described contents reproduction terminal 1. In addition, registration may be carried out by using a magnetic medium, such as a flexible disk. The operation at this time is shown in the flowchart of Fig. 2. The processing shown in the flowchart of Fig. 2 is implemented through the reading out and carrying out of a program that is stored in storage part 103 by control part 101 of contents reproduction terminal 1.

With reference to Fig. 2, in contents reproduction terminal 1, the data of the contents that have been downloaded is registered in the library of contents data retention part 104 (S10). Then, the contents data that has been registered is reproduced on display part 107 (S30).

Here, though according to the present embodiment, contents are described as an animation, the contents are not limited to an animation.

Animation data which is handled in the present embodiment includes objects such as polygons, images and text or the like, and is determined to be either a flat animation (hereinafter referred to as 2-D animation) or a stereoscopic animation (hereinafter referred to as 3-D animation), on the basis of whether the respective objects are flat (2-D) or stereoscopic (3-D). A 2-D animation is displayed in 2-D mode on display part 107 of contents reproduction terminal 1, and a 3-D animation is displayed in 3-D mode.

Furthermore, processing for registration of animation data and processing for reproduction of animation data, which are carried out in the above-described steps S10 and S30, are described in the following.

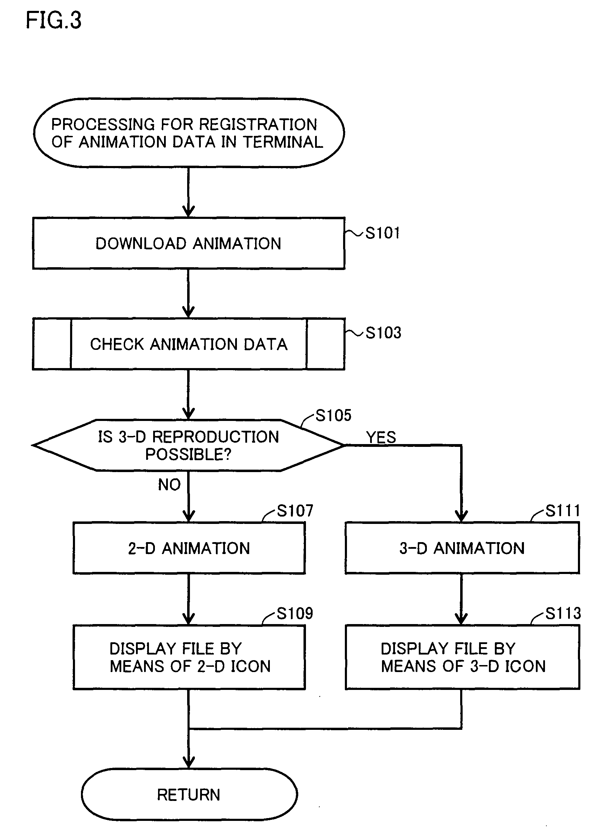

First, Fig. 3 shows a flowchart relating to processing for registration of animation data in the above-described step S10.

With reference to Fig. 3, when contents which are an animation are downloaded into input part 102 (S101), the contents of the downloaded animation data are checked in contents data reading/analyzing part 105 (S103). Processing here is described in detail below by citing subroutine.

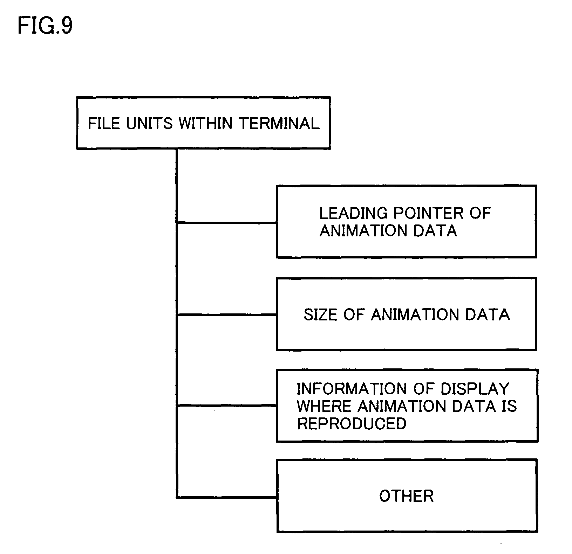

As a result of this, in the case where the downloaded animation data is not allowed to be displayed and reproduced in 3-D mode (NO in S105), this animation is determined to be a 2-D animation in contents data reading/analyzing part 105, and a flag that indicates a 2-D animation is on in the attributes information of the file of this animation and is registered in contents data retention part 104, in the data structure shown in Fig. 9 (S107). Furthermore, the file of the downloaded animation data is displayed in the form of an icon (hereinafter referred to as 2-D icon) that indicates that this is a 2-D animation (S109).

In the case where the downloaded animation data is allowed to be displayed and reproduced in 3-D mode (YES in S105), this animation is determined to be a 3-D animation in contents data reading/analyzing part 105, a flag that indicates a 3-D animation is on in the attributes information of the file of this animation and is registered in contents data retention part 104 (S111). Furthermore, the file of the downloaded animation data is displayed in the form of an icon (hereinafter referred to as 3-D icon) that indicates that this is a 3-D animation (S113).

Thus, processing for registration of animation data in step S10 is completed, and the processing proceeds to step S30.

Here, the process for checking animation data in order to determine whether or not this animation data is a 2-D animation or a 3-D animation in step S 103 is further described in the following.

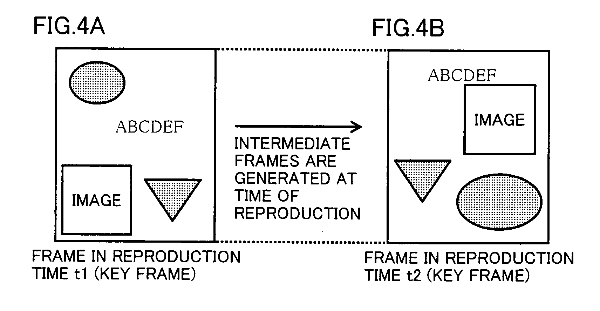

Contents which are reproduced in contents reproduction terminal 1 are formed so as to include a plurality of data groups for respective reproduction time units which are arranged along the time series of the time for reproduction. Contents which are an animation are formed so as to include a plurality of frames, referred to as key frames, which are intermittently arranged in the chronological order of the reproduction time. Figs. 4A and 4B are diagrams showing a concrete example of an animation. Fig. 4A shows a frame which is a key frame at time t1, and Fig. 4B shows a frame which is a key frame at time t2. Thus, when contents which are such an animation are reproduced, intermediate frames between key frames are generated at the time of reproduction.

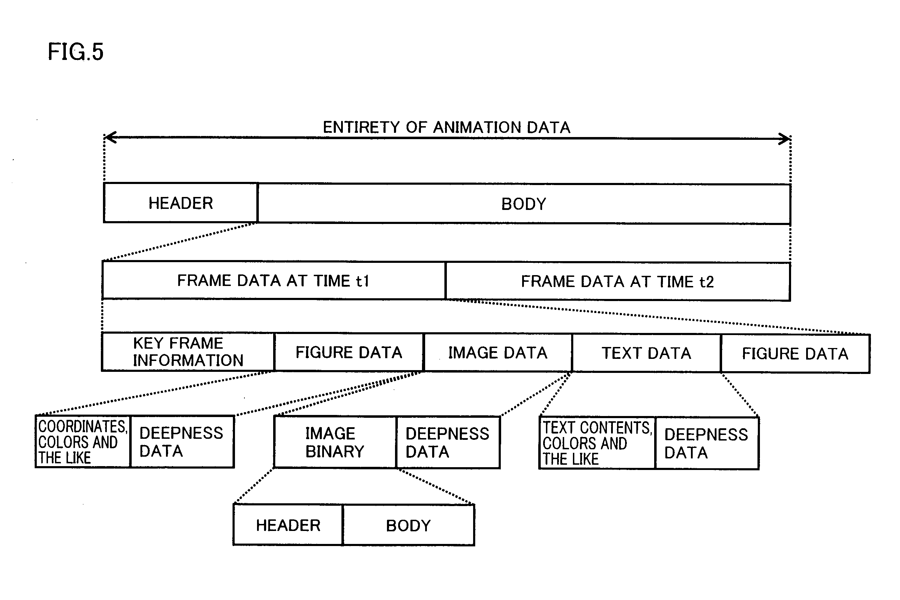

Next, Fig. 5 is a diagram showing a concrete example of the configuration of animation data. With reference to Fig. 5, animation data is formed of a header that includes attributes information, copyright information and the like of this animation, and of a body that includes the contents of the animation, and furthermore, the body includes data on key frames, as shown in Figs. 4A and 4B.

Fig. 5 shows the configuration of animation data relating to an animation of which a concrete example is shown in Figs. 4A and 4B, and the body of the animation data includes frame data at time t1 and frame data at time t2.

Furthermore, frame data included in the body includes key frame information that indicates the reproduction time and the like of this frame, and object data on each of figures, images and text that correspond to the objects which are components that form this frame.

Furthermore, figure data which is object data includes data that indicates information such as coordinates, color and the like of this figure, and data (deepness data) that indicates deepness information on the depth that has been set, in the case where this figure is a stereoscopic figure.

In addition, image data which is object data includes a binary file that has been prepared in binary for recording this image, and data that indicates deepness information on the depth that has bee set, in the case where this image is a stereoscopic image. Here, the binary file is a file for storing data that includes a header and a body for storing a general image.

In addition, text data which is object data includes data that indicates information such as the contents and color of this text, and data that indicates deepness information on the depth that has been set, in the case where this text is a stereoscopic text.

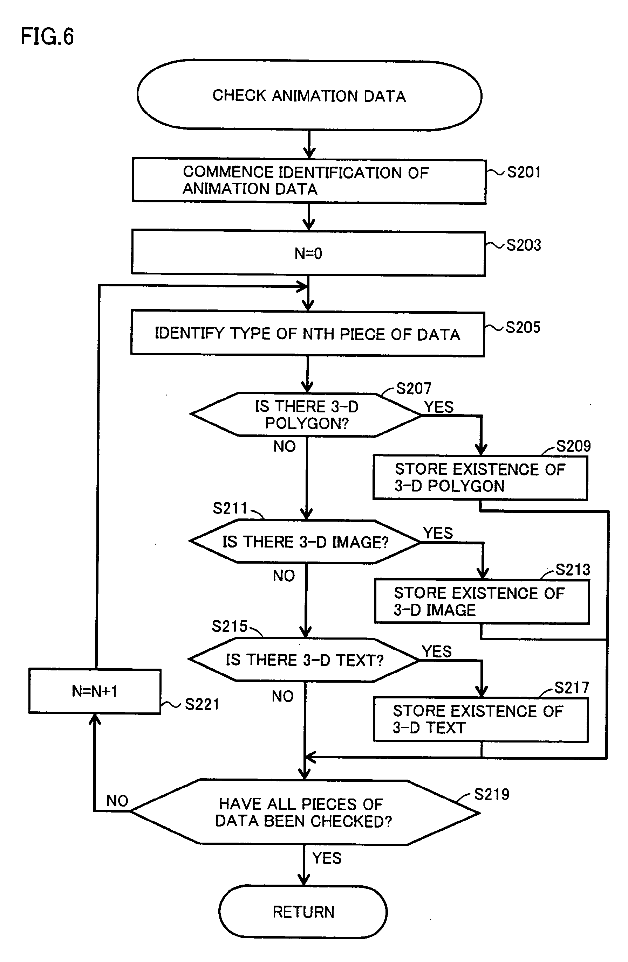

Next, processing for determining whether or not animation data such as that described above is a 2-D animation or a 3-D animation in step S 103 in the case where this animation data is downloaded into contents reproduction terminal 1 in accordance with the first embodiment is described with reference to the flowchart of Fig. 6.

With reference to Fig. 6, upon the start of identification of the downloaded animation data (S201), contents data reading/analyzing part 105 first sets value N as the initial value (S203) and identifies the attributes of the Nth piece of the object data included in the animation data, so as to identify the type of data (S205).

That is to say, contents data reading/analyzing part 105 identifies the attributes to see whether this object data is 3-D polygon (figure) data (S207), 3-D image data (S211), or 3-D text data (S215).

Here, contents data reading/analyzing part 105 confirms whether or not each piece of the object data (figure data, image data and text data in Fig. 5) included in the frame data of Fig. 5 includes data (deepness data) that indicates deepness information on the depth, and thereby, it is determined whether or not this object is a 3-D object.

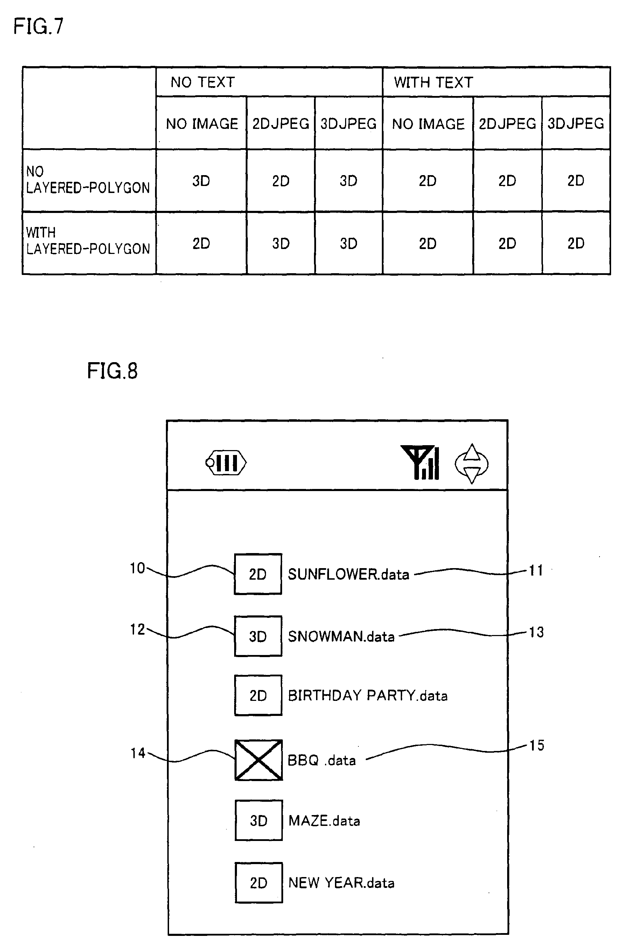

In the case where this object is a 3-D polygon (YES in S207), in the case where this object is a 3-D image (YES in S211), or in the case where this object is 3-D text (YES in S215), information is stored to the effect that such a 3-D object exists in the downloaded animation data (S209, S213, S217), and a table for identifying contents, of which a concrete example is shown in Fig. 7, is used to determine the reproduction mode depending on whether this animation data is a 2-D animation or a 3-D animation. The table for identifying contents of which a concrete example is shown in Fig. 7 is a table that has been stored in advance in storage part 103 or contents data retention part 104 of this contents reproduction terminal 1, and shows the conditions in the reproduction mode of the animation contents which are reproduced in this contents reproduction terminal 1.

Next, value N is increased by 1 (S221), and the above-described processing is repeated on the object data that is included in the next piece of the animation data. Thus, when identification is completed (YES in S219) for the entirety of the object data is included in this animation data, the determination processing of the animation data is completed.

The above-described determination processing is carried out in step S103 of Fig. 3, and thereby, whether this animation data is 2-D animation data or 3-D animation data is automatically determined, and the reproduction mode is determined for each contents reproduction terminal 1 at the time of registration in the library of contents data retention part 104.

Here, the conditions for determining whether or not this animation data is a 2-D animation or a 3-D animation are not limited to whether or not this animation data includes a 3-D object. A condition may be, for example, whether or not a command for forcing this animation data to be designated as a 3-D animation exists.

In addition, though in the above-described determination processing of the animation data, determination of whether this animation is a 3-D animation or a 3-D animation is carried out by confirming whether or not each piece of the object data that is included in the body of the animation data includes data (deepness data) indicating deepness information on the depth as an attribute, determination on whether this animation is a 3-D animation or a 2-D animation can be carried out by checking the header of this animation data, in the case where information that indicates whether the included object is 3-D or 2-D is included in the header.

Thus, in steps S109 and S113 of Fig. 3, files that have been registered in the library are displayed as shown in Fig. 8, and thereby, the user is notified whether the registered animation data is a 2-D animation or a 3-D animation.

With reference to Fig. 8, the user is notified that registered animation data 11 "sunflower.data" is a 2-D animation by means of icon 10. In addition, the user is notified that animation data 13 "snowman data" is a 3-D animation by means of icon 12. In addition, The user is notified that animation data 15 "BBQ.data" is data that cannot be reproduced in this contents reproduction terminal 1, by means of icon 14.

Thus, the above-described registration processing is carried out, and thereby, animation data in the data format shown in Fig. 9 is registered in contents data retention part 104 of contents reproduction terminal 1. With reference to Fig. 9, the animation data that is registered in contents data retention part 104 includes information that indicates the leading pointer of this animation data, information that indicates the size, reproduction mode information that is information on the display part to be reproduced (in either 2-D mode or 3-D mode), and other information.

Here, as for other information, a variety of attributes of this animation data are determined in the same manner as with the above-described determination processing, and this determined attributes information can be registered in contents data retention part 104. Concretely speaking, in the above-described determination processing, whether or not a music object is included in this animation data, whether or not information that designates a region to be reproduced is included, whether or not information that designates time of reproduction is included, whether or not the copyright information indicates a particular individual, whether or not a command for controlling the reproduction of this animation, such as rewinding or repeating, is included, and whether or not key information for event control is included is determined, and these determination results can be registered in contents data retention part 104.

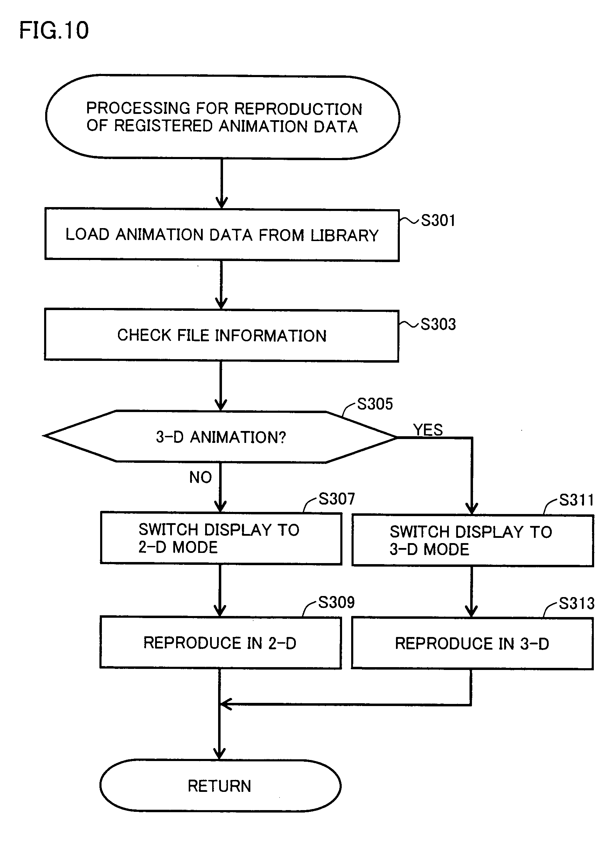

Next, Fig. 10 shows a flowchart for the processing for reproduction of animation data in step S30.

With reference to Fig. 10, first, animation data to be reproduced is loaded from the library of contents data retention part 104 (S301), and the type of this file is checked (S303). In step S303, it is checked whether or not a flag that indicates a 3-D animation has been set with reference to the reproduction mode information that is included in attributes information of the loaded data.

In the case where the loaded file is not a 3-D animation but a 2-D animation (NO in S305), display part 107 is switched to 2-D mode (S307), and this animation data is reproduced (S309).

In the case where the loaded file is a 3-D animation (YES in S305), display part 107 is switched to 3-D mode (S311), and this animation data is reproduced (S313).

Thus, the processing for reproduction of animation data in step S30 is completed, and the processing returns to the main routine shown in Fig. 2.

Here, reproduction in 3-D mode of a 3-D animation is briefly described.

When this animation data is determined to be a 3-D animation in contents data reading/analyzing part 105 in step S305, an image for the left eye and an image for the right eye, which are slightly different from each other, of this object, are generated on the basis of the deepness information showing the depth that is included in the 3-D object data of this animation data. The image for the left eye and the image for the right eye of the 3-D object, which have been prepared in this manner, are respectively stored in the image memory for the left eye and in the image memory for the right eye of image memory 106.

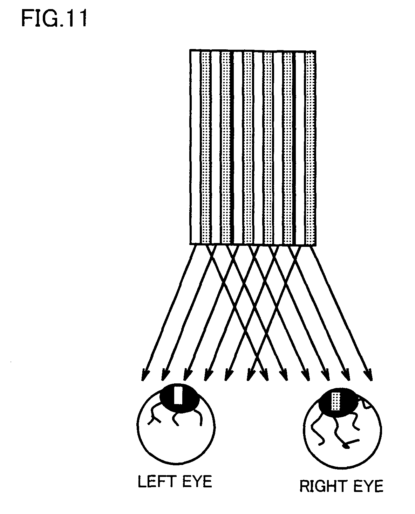

Thus, when the 3-D animation is reproduced in step S313, 3-D display device driver 108 is run so as to respectively read out the image for the left eye and the image for the right eye, which have been stored in the image memory for the left eye and the image memory for the right eye, and so as to divide the two in columns having a predetermined width in the lateral direction. Thus, as shown in Fig. 11, the columns of the image for the left eye and the image for the right eye are alternately displayed on display part 107. Contents reproduction terminal 1 according to the present embodiment is provided with a 3-D liquid crystal (not shown) in display part 107, and thereby, the respective columns displayed on display part 107 undergo effects such as those of display through a polarization glass, where columns generated from the image for the left eye are viewed only by the left eye, and columns generated from the image for the right eye are viewed only by the right eye. Concretely speaking, as disclosed in Japanese Patent Laying-Open No. 08-240790, the above-described 3-D liquid crystal has pixels in a first group that have been arranged so as to allow light to transmit through the columns of the image for the left eye and essentially prevent light from transmitting through the columns of the image for the right eye, and pixels in a second group that have been arranged so as to allow light to transmit through the columns of the image for the right eye and essentially prevent light from transmitting through the columns of the image for the left eye, and thereby, the effect can be obtained where the columns generated from the image for the left eye are viewed only by the left eye, and the columns generated from the image for the right eye are viewed only by the right eye. As a result of this, the image for the left eye and the image for the right eye, which are slightly different from each other and are displayed on display part 107, are respectively viewed by the left eye and the right eye, so that the 3-D object made of the image for the left eye and the image for the right eye is stereoscopically viewed.

Here, though in the present embodiment, display part 107 of contents reproduction terminal 1 is provided with a 3-D liquid crystal, as described above, another system that has effects such as those of display through a polarization glass may be provided instead of 3-D liquid crystal. In addition, a filter having such effects may be provided.

Furthermore, though in the above-described processing for reproduction of contents, the reproduction mode of display part 107 is automatically switched on the basis of the flag that is included in the attributes information of a file, the reproduction mode of display part 107 may be switched by means of a key input by the user. Furthermore, the switching of the reproduction mode of display part 107 is not limited to before the reproduction of animation data, but rather, may be carried out during reproduction.

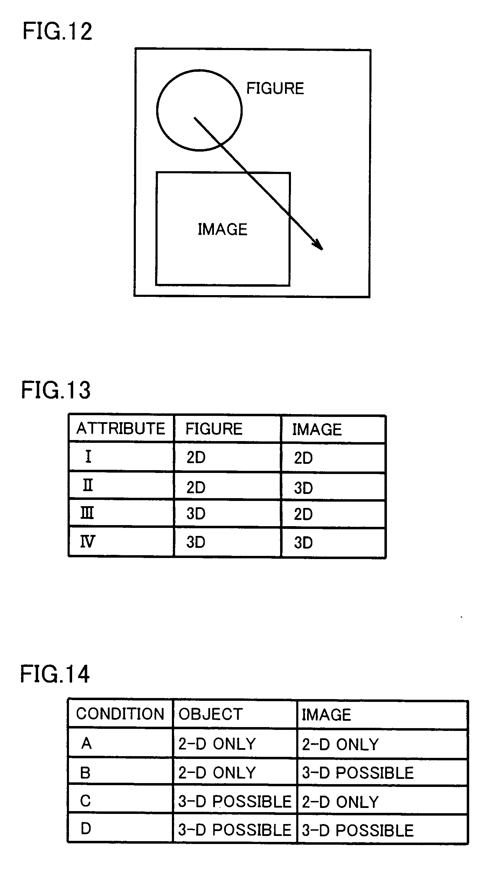

In addition, concrete examples of downloading and reproduction of contents in contents reproduction terminal 1 according to the present embodiment are described below. With reference to Fig. 12, a case is described where animation data formed of a polygon (figure) that shifts from the upper left to the lower right and an image that is arranged in the lower left is downloaded.

At this time, it is assumed that there are attributes I, II, III and IV of Fig. 13 as the attributes of the object that is included in this animation data. That is to say, with reference to Fig. 13, attribute I indicates an attribute in the case where this animation data includes a 2-D polygon and a 2-D image, attribute II indicates an attribute in the case where this animation data includes a 2-D polygon and a 3-D image, attribute III indicates an attribute in the case where this animation data includes a 3-D polygon and a 2-D image, and attribute IV indicates an attribute in the case where this animation data includes a 3-D polygon and a 3-D image.

Furthermore, it is assumed that there are conditions A to D shown in Fig. 14, as conditions for the reproduction mode of the animation contents that are reproduced in contents reproduction terminal 1. Conditions A to D shown in Fig. 14 are conditions for the reproduction mode of the animation contents which are determined by using a table for contents identification in contents reproduction terminal 1, and which can be reproduced in this contents reproduction terminal 1.

That is to say, with reference to Fig. 14, condition A is a condition for reproducing image data only in 2-D mode, and for reproducing an object that includes an image only in 2-D mode. Condition B is a condition which allows for the reproduction of image data in 3-D mode, in addition to 2-D mode, and for reproducing an object that includes an image only in 2-D mode. Condition C is a condition for reproducing image data only in 2-D mode, which allows an object that includes an image to be reproduced in 3-D mode, in addition to 2-D mode. Condition D is a condition which allows for the reproduction of image data in 3-D mode, in addition to 2-D mode, and which allows for the reproduction of an object that includes an image in 3-D mode, in addition to 2-D mode.

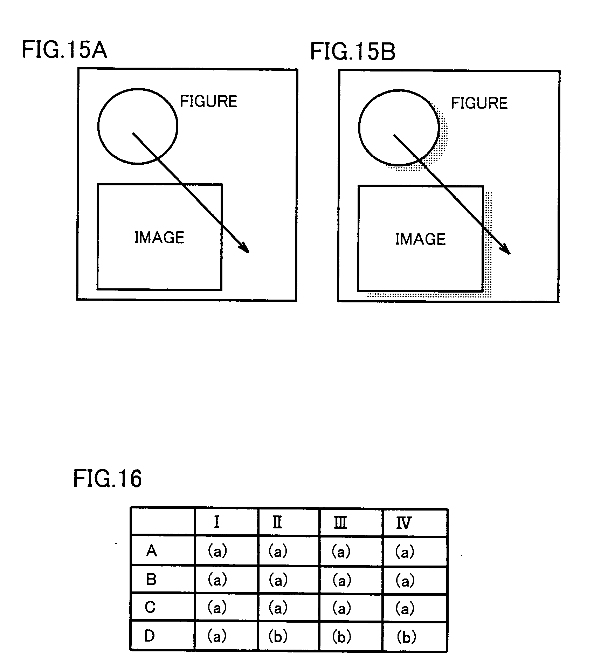

In the case where an animation that includes an object having these attributes I to IV is registered and reproduced in contents reproduction terminal 1 that can reproduce the animation in conditions A to D, reproduction in 2-D mode as shown in Fig. 15A, and reproduction in 3-D mode as shown in Fig. 15B are carried out. Concretely speaking, Fig. 16 shows the attributes of the objects when reproduced in the respective reproduction modes, and conditions of reproduction modes for the reproduced objects.

That is to say, with reference to Fig. 16, only in the case where an object includes a 3-D object (attributes II to IV) and in the case where image data can be reproduced in 3-D mode in addition to the other mode, and an object that includes an image can be reproduced in 3-D mode in addition to the other mode (condition D), this animation is identified as a 3-D animation and registered so that reproduction in 3-D mode as shown in Fig. 15B is carried out. In the case of a combination of other attributes of an object and other conditions of reproduction modes for reproduced objects, the animation is identified as a 2-D animation and registered so that reproduction in 2-D mode as shown in Fig. 15A is carried out.

Furthermore, when the reproduction mode is determined on the basis of whether the animation that is reproduced in contents reproduction terminal 1 is in 2-D or 3-D, a prioritized object can be provided. That is to say, in the above-described example, as shown in Fig. 14, the image object is prioritized, making it possible to reproduce the image in a reproduction mode that is different from the reproduction mode for other objects.

In addition, at the time when it is determined whether the animation is in 2-D or 3-D by using the table for contents identification shown in Fig. 7, the animation is determined to be a 2-D animation, and all objects that include a text object are reproduced in 2-D mode, in the case where the text object is prioritized and the animation includes text.

The above-described processing is carried out in contents reproduction terminal 1 according to the first embodiment, and thereby, 3-D text that is included in the contents can be prevented from being reproduced in 3-D mode, even in the case where this contents reproduction terminal has no function of displaying 3-D text on a 3-D display.

In the same manner, a 3-D image or a 3-D polygon which is included in the contents can be prevented from being reproduced in 3-D mode, even in the case where this contents reproduction terminal has no function of displaying a 3-D image or a 3-D polygon on a 3-D display.

In addition, in accordance with the properties of reproduction in this contents reproduction terminal, an object that is reproduced in 2-D mode or an object that is reproduced in 3-D mode can be determined with priority over other objects.

Furthermore, in contents reproduction terminal 1 according to the first embodiment, the reproduction mode of the contents is automatically determined at the time of registration of the contents data, and processing for adding information on the determined reproduction mode is carried out. Therefore, it is not necessary to select a reproduction mode for a display every time when contents are reproduced in this contents reproduction terminal, and thus, convenience for the user can be increased.

In addition, contents reproduction terminal 1 according to the first embodiment selects an appropriate reproduction mode to reproduce contents in the contents reproduction terminal, and therefore, it becomes unnecessary for a person who prepares contents to separately prepare contents for respective terminals.

Here, though in the first embodiment, contents reproduction terminal 1 determines the reproduction mode for contents at the time when the contents are registered, the reproduction mode may be determined at the time of reproduction of the contents. Such a case is described in the second and following embodiments.

### Second Embodiment

Contents reproduction terminal 1 according to the second embodiment is the same as contents reproduction terminal 1 according to the first embodiment, and therefore, the descriptions thereof are not repeated. Here, in the embodiments following the second embodiment contents reproduction terminal 1 is the same.

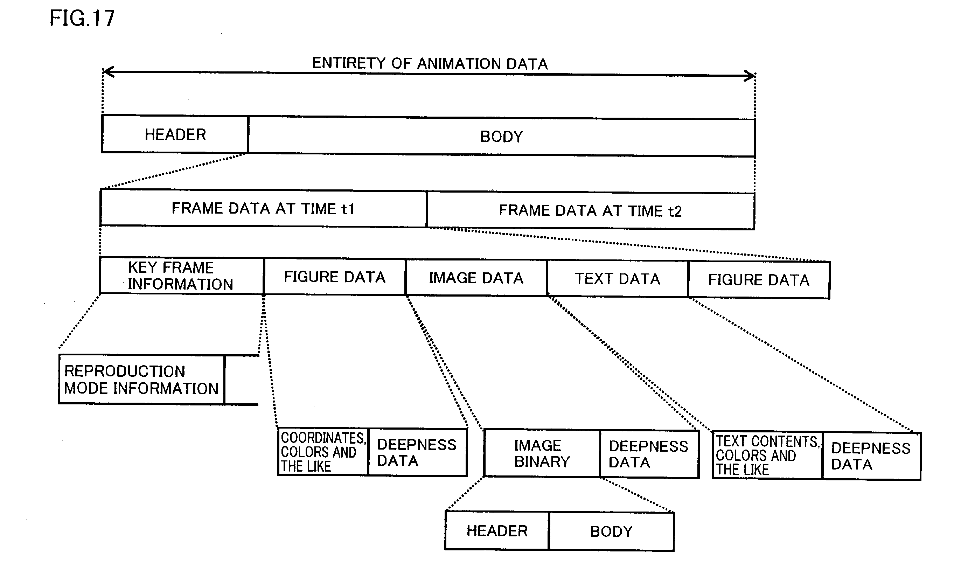

Fig. 17 shows a concrete example of the configuration of animation data according to the second embodiment. The concrete example of the configuration of the animation data shown in Fig. 17 has a similar configuration as that shown above in Fig. 5, and only points where contents differ are described in the following. Namely, with reference to Fig. 17, the animation data according to the second embodiment includes frame reproduction mode information, which is reproduction mode information concerning the reproduction mode for the frame of each piece of frame data in the key frame information of the frame data.

In contents reproduction terminal 1 according to the second embodiment, animation data is registered in the library of contents data retention part 104 without carrying out the processing for determining the reproduction mode in step S103 and the following steps from among the processing for registration shown in Fig. 3, at the time when the animation data is downloaded and registered in step S10. In addition, the processing for registration in step S10 may not be carried out, and the acquired animation data may be reproduced in step S30.

In step S30, processing for analyzing the frame reproduction mode information of each piece of frame data of the animation data is carried out so as to determine whether the reproduction mode for this frame is 2-D mode or 3-D mode, on the basis of the frame reproduction mode information, instead of the processing for checking the type of file in step S303 in the above-described processing shown in Fig. 10. Then, in step S307 or step S311, control part 101 switches the reproduction mode of display part 107 to the determined reproduction mode to reproduce this frame, and reproduces this frame in display part 107 in step S309 or in step 313.

Contents reproduction terminal 1 according to the second embodiment carries out the above-described processing, and thereby, reproduces animation data by switching the reproduction mode of display part 107 between 2-D mode and 3-D mode for each frame on the basis of the frame reproduction mode information, during the reproduction.

Here, even in the case where the reproduction mode of a certain piece of frame data on display part 107 is determined to be 3-D mode in step S303, this frame may include a 3-D object. In such a case, the reproduction mode of display part 107 is set to 3-D mode in contents reproduction terminal 1, where 2-D display is carried out for this object by generating the same image for the image for the left eye and for the image for the right eye.

Frame reproduction mode information may be included in key frame information of animation data in advance when the animation data is downloaded from an external apparatus, or may be acquired by being downloaded separately from an external apparatus in step S301 at the time when the animation data is reproduced in step S30. In such a case, contents reproduction terminal 1 refers to access information of the external apparatus from which the reproduced animation data has been downloaded, which is stored in the header or the like of this animation data, so as to request frame reproduction mode information from this external apparatus, when the animation data is loaded from the library of contents data retention part 104 in step S301. At this time, identification information, such as the ID of this contents reproduction terminal 1, may be sent, if necessary. Thus, when frame reproduction mode information is inputted through input part 102 from the external apparatus and the frame reproduction mode information is acquired, this frame reproduction mode information is written into the key frame information of the corresponding frame information of the animation data. Contents reproduction terminal 1 carries out the above-described processing in step S303 and in the following steps, in a manner where the animation data is reproduced by switching the reproduction mode of each frame on display part 107 between 2-D mode and 3-D mode during reproduction.

Contents reproduction terminal 1 requires frame reproduction mode information from the deliverer of animation data at the time when the animation data is reproduced in the configuration, and thereby, the deliverer of the animation data can impose a fee for reproduction in 3-D mode, in this contents reproduction terminal 1. Furthermore, the deliverer can allow a specific contents reproduction terminal 1 or a specific user to reproduce in 3-D mode.

In addition, at the time when the processing for registration in step S 10 is carried out in contents reproduction terminal 1 so as to register the downloaded animation data in the library of contents data retention part 104, it may be determined whether the display mode for each frame is 3-D mode or 2-D mode in step S103, in contents data reading/analyzing part 105, and frame reproduction mode information that indicates the determined display mode may be generated so as to be added to the key frame information of each frame.

In addition, frame reproduction mode information may not be information that explicitly indicates the display mode for the frame, but rather, may be information for determining the display mode of the frame. Concretely speaking, frame reproduction mode information may indicate conditions for the reproduction mode in accordance with the attributes of objects which are included in the frame, such as, for example, the table for contents identification shown in Fig. 7 in the first embodiment. In this case, at the time when animation data is reproduced by carrying out the processing for reproduction in step S30 in contents reproduction terminal 1, the attributes of each object that is included in the frame are recognized in step S303, in contents data reading/analyzing part 105, and thereby, the display mode for this frame is determined by referring to the frame reproduction mode information.

### Third Embodiment

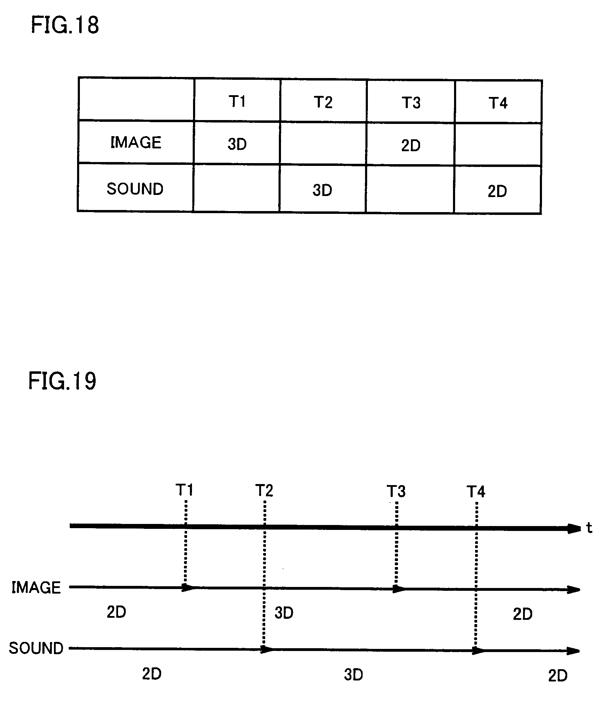

The animation data according to the third embodiment includes, in the header, time reproduction mode switching information, which is reproduction mode information for switching the reproduction mode in accordance with the reproduction time. Fig. 18 shows a concrete example of a table of time reproduction mode switching information that is reproduction mode information for switching the reproduction mode in accordance with the reproduction time. The table of time reproduction mode switching information shown in Fig. 18 is a table in the case where the animation data is made up of image data and sound data, and this animation data independently holds image time reproduction mode switching information that indicates the reproduction mode in accordance with the reproduction time concerning image data, and sound time reproduction mode switching information that indicates the reproduction mode in accordance with the reproduction time concerning sound data. Here, in this case, the reproduction mode for sound data is the reproduction mode of a sound outputting apparatus, such as a speaker, not shown in Fig. 1.

At the time when such animation data is downloaded and registered in step S10 in contents reproduction terminal 1 according to the third embodiment, the processing for determining the reproduction mode in step S103 and in the following steps from among the processing for registration shown in Fig. 3 is not carried out, and the animation data is registered in the library of contents data retention part 104. In addition, the processing for registration in step S10 may not be carried out, and the acquired animation data may be reproduced in step S30.

In step S30, the processing for analyzing reproduction mode information in accordance with the reproduction time that is included in the header of the animation data is carried out, instead of the processing for checking the type of file in step S303, from among the above-described processing shown in Fig. 10, and thereby, it is determined whether the reproduction mode of each reproduction time is 2-D mode or 3-D mode. Then, control part 101 switches the reproduction mode of display part 107 (or the sound outputting apparatus) to the determined reproduction mode in order to reproduce the data that is to be reproduces in this reproduction time in step S307 or in step S311, and reproduces the data during the reproduction time on display part 107 in step S309 or in step S313.

Contents reproduction terminal 1 according to the third embodiment carries out the above-described processing, and thereby, reproduces animation data by switching the reproduction mode of display part 107 (or the sound outputting apparatus) for each reproduction time thereof between 2-D mode and 3-D mode during reproduction, as shown in Fig. 19.

In addition, in the third embodiment, time reproduction mode switching information may be acquired by being separately downloaded from an external apparatus in step S301, at the time when the animation data is reproduced in step S30. In this case, contents reproduction terminal 1 requires, in step S301, time reproduction mode switching information from the external apparatus from which the reproduced animation data is downloaded, in the same manner as in the second embodiment. In addition, when time reproduction mode switching information is acquired from the external apparatus, this time reproduction mode switching information is written into the header of the animation data. Contents reproduction terminal 1 carries out the above-described processing in step S303 and in the following steps, and reproduces animation data by switching the reproduction mode of display part 107 (or the sound outputting apparatus) for each reproduction time thereof between 2-D mode and 3-D mode during reproduction.

In addition, at the time when the animation data that has been downloaded by carrying out the processing for registration in step S10 in contents reproduction terminal 1 is registered in the library of contents data retention part 104, it may be determined in step S103 whether the display mode for each reproduction time thereof is 3-D mode or 2-D mode for each reproduction time, in contents data reading/analyzing part 105, and time reproduction mode switching information that indicates the determined display mode may be generated so as to be added to the header of the animation data.

In addition, the time reproduction mode switching information may not be information that explicitly indicates the display mode for the reproduction time, but rather, may be information for determining the display mode for this reproduction time. Concretely speaking, the frame reproduction mode information may be information that indicates conditions for the reproduction mode in accordance with the attributes of objects which are include in the animation data that is reproduced for this reproduction time, such as, for example, the table for contents identification shown in Fig. 7, according to the first embodiment. In this case, at the time when the animation data is reproduced by carrying out the processing for reproduction in step S30 in contents reproduction terminal 1, the attributes of each object that is included in the animation data which is reproduced for this reproduction time are recognized in step S303 in contents data reading/analyzing part 105, and the display mode for this reproduction time is determined by referring to the time reproduction mode switching information.

### Fourth Embodiment

The animation data according to the fourth embodiment has the same configuration as the configuration of the animation data according to the first embodiment shown above in Fig. 5. Contents reproduction terminal 1 according to the fourth embodiment also registers animation data in the library of contents data retention part 104 without carrying out the processing for determining the reproduction mode in step S103 and in the following steps, from among the processing for registration shown in Fig. 3, at the time when the animation data is downloaded and registered in step S10. In addition, the processing for registration in step S10 may not be carried out, and the acquired animation data may be reproduced in step S30.

The attributes of objects which are included in each frame of the animation data are recognized, and the processing for identifying the type of data is carried out in step S30, instead of the processing for checking the type of file in step S303 from among the above-described processing shown in Fig. 10, and it is determined in accordance with the results of this identification whether the reproduction mode of this frame is 2-D mode or 3-D mode. This processing for identification is the same as the processing for determination of the reproduction mode in step S103 from among the processing for registration shown in Fig. 3 which is carried out at the time when animation is downloaded and registered in step S10. That is to say, the attributes of object data that is included in each frame are recognized so as to determine whether the object data is a 3-D polygon (figure), a 3-D image or 3-D text.

Furthermore, it is determined, in the fourth embodiment, which reproduction mode is selected as the reproduction mode of the frame on the basis of the order of priority in the case where a plurality of reproduction modes are cited as possibilities at the time when the reproduction mode for this frame is determined in accordance with the results of the identification. The order of priority may be the order of priority of objects which are used to determine the reproduction mode, or may be the order of priority for the reproduction mode that is selected as the reproduction mode for the frame.

Furthermore, the order of priority of objects may be included in advance in each piece of object of animation data at the time when the animation data is downloaded from an external apparatus, or may be set by accepting an input by the user through input part 102 at the time when the animation data is reproduced in contents reproduction terminal 1. In addition, the order of priority of objects may be automatically set on the basis of the deepness information that has been set for each object. It may be automatically set, for example, in a manner where the order of priority of the object to which the deepness information that indicates the display in the front has been added is the first. In addition, it may be automatically on the basis of the order of objects which are displayed during the course of the reproduction time of the animation data.

In addition, the order of priority of reproduction modes may also be included in advance in the header or the like of animation data at the time when the animation is downloaded from an external apparatus, or may be set by accepting an input by the user through input part 102 at the time when the animation data is reproduced in contents reproduction terminal 1. In addition, the order of priority of reproduction modes may be stored in advance in storage part 103 of contents reproduction terminal 1. In the case where the properties of contents reproduction terminal 1 are well-suited for 3-D display, for example, the order of priority of reproduction modes may be automatically set in a manner where the order of priority of 3-D mode is set higher than the other mode, on the basis of the properties that have been stored in advance in storage part 103 in the case where 2-D mode and 3-D mode are cited as the possible reproduction modes, when the reproduction mode of the frame is determined in accordance with the results of identification.

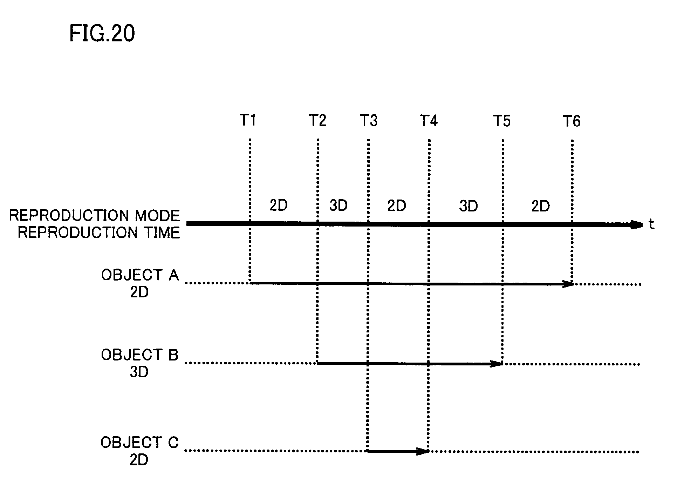

Contents reproduction terminal 1 according to the fourth embodiment carries out the above-described processing, and thereby, reproduction of the following animation data, for example, is carried out. That is to say, in the case where animation data that includes objects A to C is reproduced, and in the case where objects A and C are objects which are displayed in 2-D and object B is an object that is displayed in 3-D, where the order of priority has been set in the order of objects C, D and A, the reproduction shown in Fig. 20 is carried out in accordance with the above-described objects that are included in the respective frames.

With reference to Fig. 20, the frames which are reproduced for reproduction time T1 to T2 and T5 to T6 include object A only, and therefore, the reproduction mode for these frames is determined to be 2-D mode in accordance with the results of identification of object A. In addition, the frames which are reproduced for reproduction time T2 to T3 and T4 to T5 include object A and object B, and therefore, the reproduction mode for these frames is determined to be 3-D mode, in accordance with the results of identification of object B, of which the order of priority is higher. In addition, the frames which are reproduced for reproduction time T3 to T4 include object A, object B and object C, and therefore, the reproduction mode for these frames is determined to be 2-D mode, in accordance with the results of identification of object C, of which the order of priority is higher.

Contents reproduction terminal 1 according to the fourth embodiment reproduces animation data in this manner, and thereby, the display of one object which draws attention and of which the order of priority is higher can be prevented from changing between 2-D display and 3-D display during reproduction, making it easy for the viewer to see the animation data while paying attention to this object. In addition, the maker of the animation can make the viewer pay attention to an object that is intended to draw attention by increasing the order of priority of this object. Fifth Embodiment

The animation data according to the fifth embodiment includes reproduction mode information either in key frame information, as described in the second embodiment, or in the header, as described in the third embodiment, in the animation data, and in addition, includes information concerning conditions for permission for permitting switching to 3-D mode in the case where the reproduction mode information indicates 3-D mode.

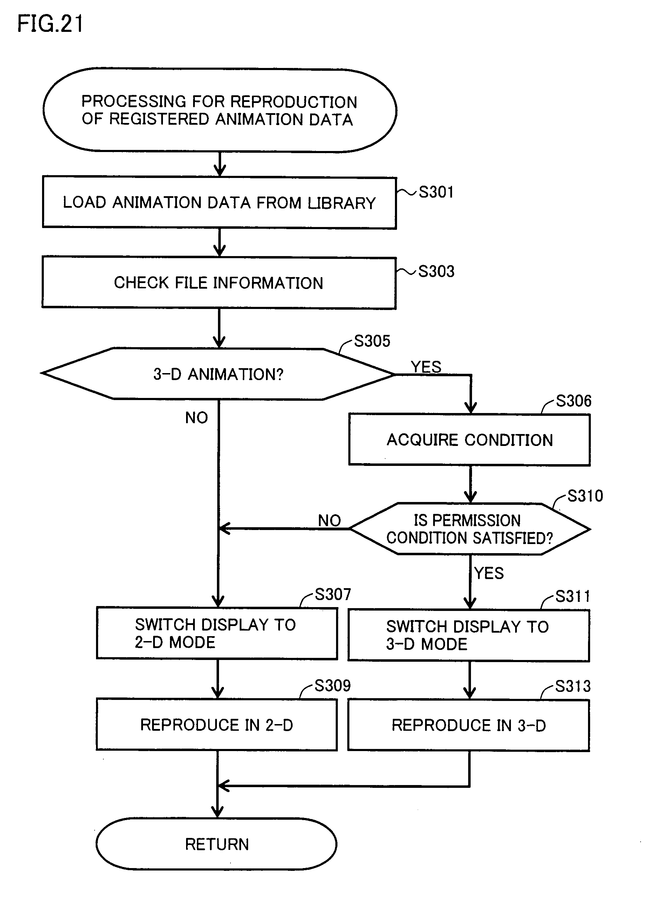

Contents reproduction terminal 1 according to the fifth embodiment carries out the processing for reproduction shown in Fig. 21, instead of the processing for reproduction shown in Fig. 10 and described in the first embodiment, at the time when such animation data is reproduced in step S30. In the processing for reproduction shown in Fig. 21, steps S301 to S305 in the processing for reproduction shown in Fig. 10 are carried out in the same manner. Then, in the case where the file that has been loaded in step S305 is 3-D animation (YES in S305), contents reproduction terminal 1 according to the fifth embodiment acquires the conditions at the time of reproduction (S306). Then, contents data reading/analyzing part 105 refers to information concerning the conditions for permission that are included in the animation data, and determines whether or not the conditions that have been acquired in step S306 satisfy the conditions for permission (S310). Only in the case where the conditions for permission are satisfied in step S310 (YES in S310) does control part 101 switch display part 107 to 3-D mode (S311), and reproduce this animation data (S313). In the case where the conditions for permission are not satisfied in step S310 (NO in S310), control part 101 switches display part 107 to 2-D mode (S307) and reproduces this animation data in 2-D mode (S309).

The conditions at the time of reproduction which are acquired in step S306 are not particularly limited. Conditions for a user who reproduces contents can be cited as a concrete example of the conditions. Concretely speaking, a password or the like of which the input has been accepted through input part 102 corresponds to such conditions. In addition, conditions for the user may be biological information on the user, such as a fingerprint or an iris pattern of the user, in the case where contents reproduction terminal 1 is provided with an apparatus for reading such biological information. In addition, conditions for the user may be unlocking key information that has been acquired in advance and stored in contents data retention part 104 or the like, in the case of a system where such unlocking key information is delivered from the contents deliverer under advance payment of the fee.

Contents reproduction terminal 1 according to the present embodiment limits switching of the reproduction mode by using such conditions for the user who reproduces contents, and thereby, it is possible to allow only a specific user to reproduce in 3-D mode or reproduce in 2-Dmode, which is useful in the case where a fee or registration as a member is required for the reproduction of animation data. In addition, usage of biological information provides advantages such that the precision of user identification can be enhanced and reproduction in 3-D mode can be limited when the user is in a particular state of health. In the case where an iris pattern is used as biological information, for example, reproduction in 3-D mode can be limited at the time when the eyes of the viewer are determined to be fatigued by a mechanism that is provided to evaluate eye fatigue, and similarly, in the case where blood pressure, the number of heartbeats per minute and the like are used as biological information, reproduction in 3-D mode can be limited at the time when the state of health of the viewer is determined to be poor by a mechanism that is provided to evaluate the state of health.

In addition, conditions for the contents reproduction terminal that reproduces contents can be cited as another concrete example of conditions for reproduction which are acquired in step S306. Concretely speaking, particular information of contents reproduction terminal 1 itself which is stored in storage part 103 or the like of contents reproduction terminal 1 corresponds to such conditions.

Contents reproduction terminal 1 according to the present embodiment limits switching of the reproduction mode by using such conditions for the contents reproduction terminal which reproduces contents, and thereby, it is possible to permit only a particular contents terminal to reproduce in 3-D mode or reproduce in 2-D mode, which is useful in the case where contents are delivered to a particular contents terminal or to a particular type of contents terminal.

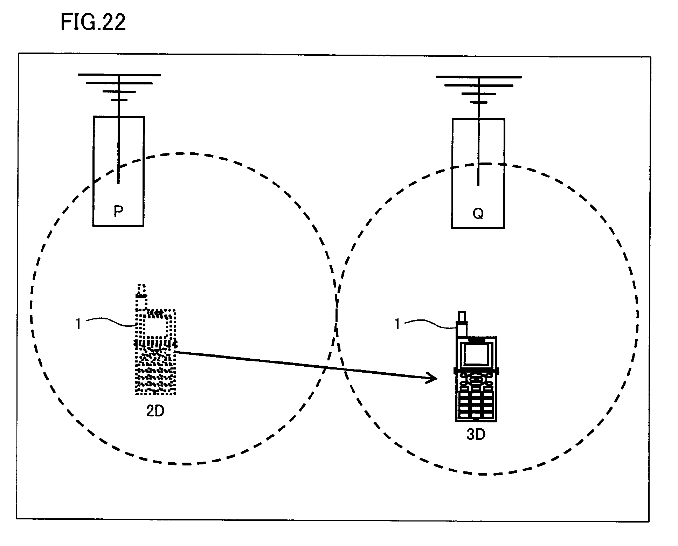

In addition, conditions for the place where contents are reproduced can be cited as another concrete example of conditions for reproduction which are acquired in step S306. Concretely speaking, a base that is in the range of communication at the time of reproduction of contents can be cited in the case where contents reproduction terminal 1 is a cellular phone with a communication function. In such a case, information which indicates the base to be communicated with and which is sent together with contents or information which indicates the base to be communicated with and which is sent at the time of communication with the base in the range of communication that is periodically carried out is acquired in step S306, in the case where contents are reproduced at the same time as reception by carrying out a streaming communication at the time of reproduction of the contents, and it is determined in step S310 whether or not the information that indicates this base corresponds to a predetermined base for permitting switching to 3-D mode under the conditions for permission. Switching to 3-D mode is permitted under such conditions, and thereby, as shown in Fig. 22, even 3-D animation is reproduced in 2-D mode, because reproduction in 3-D mode is not permitted in the case where contents reproduction terminal 1 is within the range of communication of base P that does not satisfy the conditions so as to communicate with base P, and the 3-D animation is reproduced in 3-D mode in the case where contents reproduction terminal 1 is within the range of communication of base Q that satisfies the conditions so as to communicate with base Q.

Contents reproduction terminal 1 according to the present embodiment limits switching of the reproduction mode under such conditions for the place where contents are reproduced, and thereby, it is possible to permit a contents reproduction terminal that exists in a particular place to reproduce in a particular reproduction mode, which is useful in the case where the area for allowing for reproduction in a particular reproduction mode is limited.

In addition, conditions for the time when contents are reproduced can be cited as another concrete example of conditions for reproductions which are acquired in step S306. Concretely speaking, information on the time when contents which are automatically acquired by means of a timer function or a calendar function are reproduced corresponds to such conditions in the case where contents reproduction terminal 1 is provided with such a function, allowing for the acquirement of the present time or date. It is determined in step S310 whether or not this information on the time when contents are reproduced corresponds to a predetermined time when switching to 3-D mode is permitted under the conditions for permission.

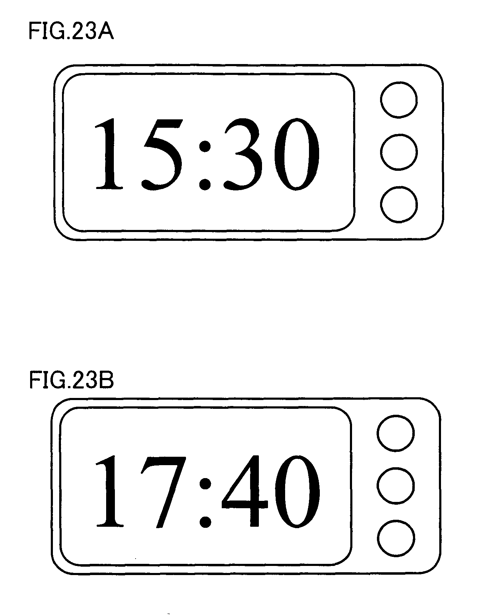

Contents reproduction terminal 1 according to the present embodiment limits switching of the reproduction mode under such conditions on the time when contents are reproduced, and thereby, a 3-D animation which indicates the present time when contents reproduction terminal 1 does not satisfy condition (15:30) as shown in Fig. 23A is reproduced in 2-D mode because reproduction in 3-D mode is not permitted, and the 3-D animation is reproduced in 3-D mode in the case where it has passed time (17:40) as shown in Fig. 23B that satisfies the condition. By providing such a system, it is possible to permit reproduction in 3-D mode only at a particular time, which is useful in the case where animation data is intended to be reproduced in 3-D mode only for a particular period of time, as with an alarm function.

Conditions for reproduction may, of course, be a single condition, of which a concrete example is cited in the above, or may be a combination of two or more conditions.

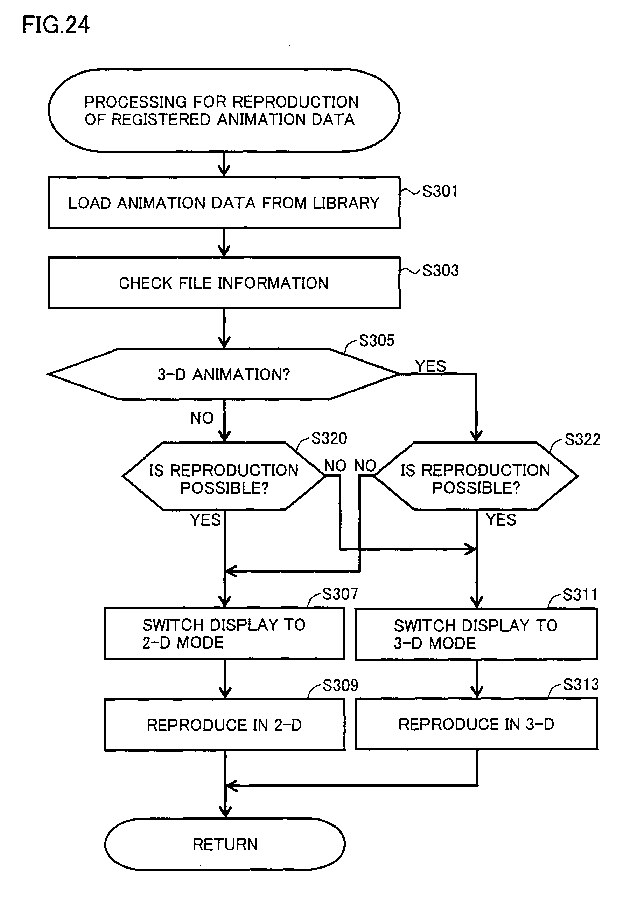

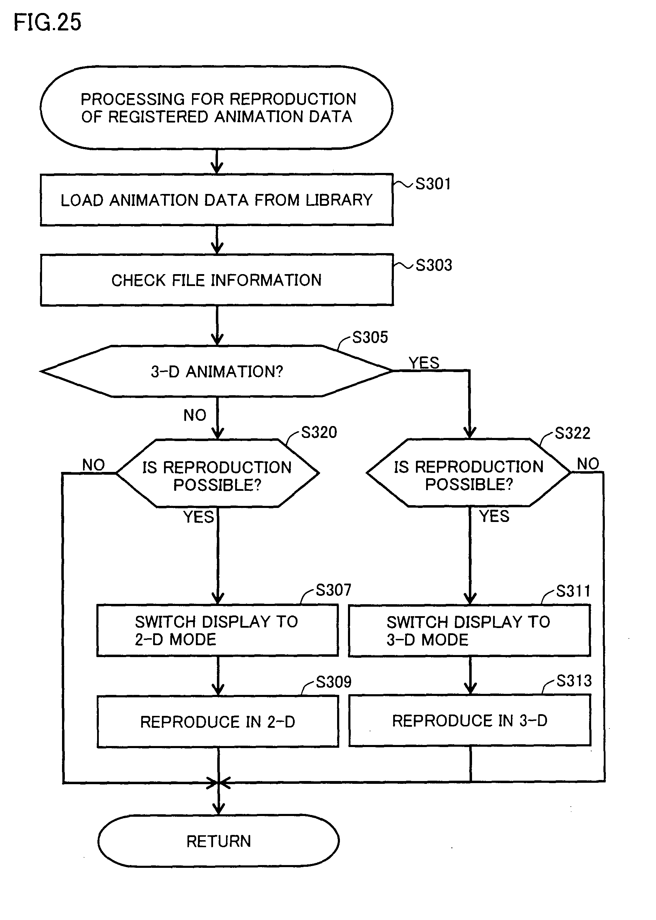

Furthermore, in some cases, some frames cannot be appropriately reproduced when contents reproduction terminal 1 according to any of the first to fifth embodiments carries out the processing for reproduction of animation data in step S30, where the animation data is reproduced in the display mode that has been determined in step S303. In the case where the data cannot be reproduced because this contents reproduction terminal 1 cannot allow for display in this display mode, it is preferable to reproduce this frame by switching display part 107 to another display mode when it is determined in control part 101 that this frame cannot be displayed in the determined display mode (NO in S320 or NO in S322), even in the case where, as shown in Fig. 24, display in 3-D mode or display in 2-D mode has been determined in step S305. Alternatively, as shown in Fig. 25, in the case where it is determined in control part 101 that this frame cannot be displayed in the determined display mode (NO in S320 or NO in S322), it is preferable to skip the processing for this frame so as to make the processing go to the next processing for the frame, making reproduction of the animation data continue.

Furthermore, a method for identifying contents and a method for reproducing contents, which are implemented in the above-described contents reproduction terminal can be provided as programs. Such programs can also be recorded in recording media that can be read by a computer, such as flexible disks, CD-ROMs (Compact Disk-ROM), ROMs, RAMs and memory cards attached to a computer, so as to be provided as program products. Alternatively, programs can be provided by being recorded in recording media such as hard disks that are built into a computer. In addition, programs can be provided through downloading via a network.

The provided program products are used so that the programs are installed in a program storing part, such as a hard disk, and run. Here, the program products include programs themselves and recording media where programs are recorded.

Here, the embodiments that have been disclosed in the specification are illustrated from all aspects, and should not be considered to be limitative. The scope of the present invention is not defined by the above description, but by the claims, and is intended to include meanings equivalent to the claims and all modifications within the scope.

### Industrial Applicability

As described above, contents are automatically identified and optimal reproduction mode can be determined according to this invention, and therefore, the invention can be applied advantageously to reproduction of contents.

## Claims

1. A contents reproduction apparatus comprising:
a contents reproduction part (107) which can reproduce contents in a plurality of reproduction modes including three-dimensional display;
a recognition part (105) which recognizes attributes of an object included in contents;
a determination part (105) which determines the reproduction mode of the contents on the basis of said conditions for contents to be reproduced and the attributes of the object that have been recognized in said recognition part (105); and
a control part (101) which controls the switching between said plurality of reproduction modes on the basis of said reproduction mode that has been determined in said determination part (105), wherein
said contents reproduction part (107) reproduces said contents in said reproduction mode that has been switched by said control part (101).

2. The contents reproduction apparatus according to claim 1, wherein said control part (101) controls the switching between said plurality of reproduction modes in the case where a predetermined condition is satisfied at the time of reproduction of said contents.

3. The contents reproduction apparatus according to claim 2, wherein said predetermined condition includes at least one of a condition concerning time when said contents are reproduced, a condition concerning a place where said contents are reproduced, a condition concerning a user who reproduces said contents and a condition concerning said contents reproduction apparatus for reproducing said contents.

4. A contents reproduction apparatus comprising:
a contents reproduction part (107) which can reproduce contents in a plurality of reproduction modes including three-dimensional display;
an acquisition part (105) which acquires information concerning the reproduction mode of said contents;
a determination part (105) which determines the reproduction mode of said contents on the basis of said information concerning the reproduction mode of said contents that has been acquired by said acquisition part (105); and
a control part (101) which controls the switching between said plurality of reproduction modes during reproduction of said contents in said contents reproduction part (107), on the basis of said reproduction mode that has been determined by said determination part (105).

5. The contents reproduction apparatus according to claim 4, wherein
said information concerning the reproduction mode of said contents includes reproduction mode information for determining the reproduction mode in accordance with the reproduction time of said contents, and
said control part (101) controls the switching between said plurality of reproduction modes for each reproduction time unit of said contents during reproduction of said contents in said contents reproduction part (107), on the basis of said reproduction mode that has been determined by said determination part (105) from said reproduction mode information.

6. The contents reproduction apparatus according to claim 4, wherein
said information concerning the reproduction mode of said contents includes reproduction mode information for determining the reproduction modes for a plurality of data groups for the respective reproduction time units which are arranged along the time series of the time for reproduction, where said data groups form said contents, and
said control part (101) controls the switching between said plurality of reproduction modes for each of said data groups that form said contents during reproduction of said contents in said contents reproduction part (107), on the basis of said reproduction mode that has been determined by said determination part (105) from said reproduction mode information.

7. The contents reproduction apparatus according to claim 6, wherein
said reproduction mode information is information for determining the reproduction mode of said data group on the basis of the attributes of the objects included in said data group,
the contents reproduction apparatus further comprises a recognition part (105) which recognizes said attributes of said objects, and
said determination part (105) determines said reproduction mode of each of said data groups that form said contents on the basis of said attributes of said objects included in said data groups which have been recognized by said recognition part (105) and said reproduction mode information.

8. The contents reproduction apparatus according to claim 7, wherein said determination part (105) determines one reproduction mode in accordance with the order of priority of reproduction modes that have been preset when a plurality of reproduction modes are determined as said reproduction modes of said data groups on the basis of said attributes of said objects included in said data groups that have been recognized by said recognition part (105).

9. The contents reproduction apparatus according to claim 7, wherein said determination part (105) determines one reproduction mode in accordance with the order of priority of objects that have been preset when a plurality of reproduction modes are determined as said reproduction modes of said data groups on the basis of said attributes of said objects included in said data groups that have been recognized by said recognition part (105).

10. The contents reproduction apparatus according to claim 9, wherein said order of priority of said objects is the order of priority on the basis of deepness information that has been attached to said objects.

11. The contents reproduction apparatus according to claim 9, wherein said order of priority of said objects is the order of priority on the basis of the order of alignment along the time series of the time for reproduction of said objects.

12. The contents reproduction apparatus according to claim 4, wherein said acquisition part (105) acquires said information concerning the reproduction mode of said contents from said contents.

13. The contents reproduction apparatus according to claim 4, wherein said acquisition part (105) acquires said information concerning the reproduction mode of said contents from an external apparatus.

14. The contents reproduction apparatus according to claim 4, wherein said control part (101) controls the switching between said reproduction modes in order to reproduce, in said contents reproduction part (107), a succeeding portion of said contents next to the portion that is not appropriately reproduced in said contents reproduction part (107) during reproduction of the preceeding portion prior to said portion that is not appropriately reproduced in said contents reproduction part (107) when in said contents reproduction part (107), said contents cannot be appropriately reproduced in the reproduction mode that has been switched by said control part (101).

15. The contents reproduction apparatus according to claim 4, wherein said control part (101) controls the switching between said reproduction modes in order to reproduce, in said contents reproduction part (107), the portion of said contents next to the portion that is not appropriately reproduced in said contents reproduction part (107) during reproduction of the portion prior to said portion that is not appropriately reproduced in said contents reproduction part (107) when in said contents reproduction part (107), said contents cannot be appropriately reproduced in the reproduction mode that has been switched by said control part (101).

16. The contents reproduction apparatus according to claim 4, wherein said control part (101) controls the switching between said plurality of reproduction modes in the case where a predetermined condition is satisfied, at the time of reproduction of said contents.

17. The contents reproduction apparatus according to claim 16, wherein said predetermined condition includes at least one of a condition concerning time when said contents are reproduced, a condition concerning a place where said contents are reproduced, a condition concerning a user who reproduces said contents and a condition concerning said contents reproduction apparatus for reproducing said contents.

18. A contents identification method for identifying the reproduction mode of contents that include an object, comprising:
a recognition step (S207, S211, S215) of recognizing attributes of said object; and
a determination step (S103) of determining said reproduction mode of contents to be reproduced on the basis of a condition for said contents and the recognition of said recognition step.

19. The contents identification method according to claim 18, wherein said condition for said contents to be reproduced is a condition that is stored in each reproduction apparatus for reproducing said contents.

20. The contents identification method according to claim 18, wherein
said condition for said contents to be reproduced is a condition that is stored in each of the reproduction apparatuses for reproducing said contents in accordance with the ability of said reproduction apparatuses, and
in said determination step (S103), said reproduction mode of said contents is determined by giving priority to the use of recognition concerning a specific type of object within the range of said condition.

21. The contents identification method according to claim 18, wherein in said recognition step (S207, S211, S215), whether or not said object is an object to be three-dimensionally displayed in accordance with said attributes of said object is recognized on the basis of whether or not the data of said object includes deepness information that indicates the depth of said object.

22. The contents identification method according to claim 18, further comprising a registration step (S107, S111) of registering information that indicates said reproduction mode of said contents that have been determined in said determination step (S103) by adding to the data of said contents.

23. The contents identification method according to claim 22, further comprising a notification step (S109, S113) of notifying said reproduction mode of said contents registered.

24. The contents identification method according to claim 18, wherein
said object is included in each of data groups, said data groups forming said contents and arranged in the respective reproduction time units along the time series of the time for reproduction, and
in said determination step (S103), said reproduction mode is determined for each of said data groups that form said contents.

25. The contents identification method according to claim 24, wherein in said determination step (S103), one reproduction mode is determined in accordance with the order of priority of reproduction modes that has been preset when a plurality of reproduction modes have been determined as said reproduction modes of said data groups on the basis of said attributes of said objects included in said data groups that have been recognized in said recognition step (S207, S211, S215).

26. The contents identification method according to claim 24, wherein in said determination step (S103), one reproduction mode is determined in accordance with the order of priority of objects that has been preset when a plurality of reproduction modes have been determined as said reproduction modes of said data groups on the basis of said attributes of said objects included in said data groups that have been recognized in said recognition step (S207, S211, S215).

27. The contents identification method according to claim 26, wherein said order of priority of said objects is the order of priority on the basis of deepness information that has been added to said objects.

28. The contents identification method according to claim 26, wherein said order of priority of said objects is the order of priority on the basis of the order of alignment along the time series of the time for reproduction of said objects.

29. A contents reproduction method for reproducing contents to which information concerning the reproduction mode has been added, comprising:
a switching step (S307, S311) of switching the reproduction mode of a reproduction apparatus for reproducing said contents on the basis of said information concerning said reproduction mode that has been added to said contents; and
a reproduction step (S309, S313) of reproducing said contents in said switched reproduction mode.

30. A contents identification program product for allowing a computer to execute a contents identification method for identifying the reproduction mode of contents that include an object, which allows a computer to execute:
an identification step (S207, S211, S215) of identifying the attributes of said object; and
a determination step (S103) of determining said reproduction mode of said contents on the basis of a condition for said contents to be reproduced and the identification of said identification step.

31. The contents identification program product according to claim 30, wherein said condition for said contents to be reproduced is a condition that is stored in each reproduction apparatus for reproducing said contents.

32. The contents identification program product according to claim 30, wherein
said condition for said contents to be reproduced is a condition that is stored in each of the reproduction apparatuses for reproducing said contents in accordance with the ability of said reproduction apparatuses, and
in said determination step (S103), said reproduction mode of said contents is determined by giving priority to the use of said recognition concerning a specific type of object within the range of said condition.

33. The contents identification program product according to claim 30, wherein in said recognition step (S207, S211, S215), whether or not said object is an object to be three-dimensionally displayed in accordance with said attributes of said object is recognized on the basis of whether or not the data of said object includes deepness information that indicates the depth of said object.

34. The contents identification program product according to claim 30, which allows the computer to further execute a registration step (S107, S111) of registering information that indicates said reproduction mode of said contents that have been determined in said determination step (S103) by adding to the data of said contents.

35. The contents identification program product according to claim 34, which allows the computer to further execute a notification step (S109, S113) of notifying said reproduction mode of said contents registered.

36. The contents identification program product according to claim 30, wherein
said object is included in each of data groups, said data group forming said contents and arranged in respective reproduction time units along the time series of the time for reproduction, and
in said determination step (S103), said reproduction mode is determined for each of said data groups that form said contents.

37. The contents identification program product according to claim 36, wherein in said determination step (S103), one reproduction mode is determined in accordance with the order of priority of reproduction modes that has been preset when a plurality of reproduction modes have been determined as said reproduction modes of said data groups on the basis of said attributes of said objects included in said data groups that have been recognized in said recognition step (S207, S211, S215).

38. The contents identification program product according to claim 36, wherein in said determination step (S103), one reproduction mode is determined in accordance with the order of priority of objects that has been preset when a plurality of reproduction modes have been determined as said reproduction modes of said data groups on the basis of said attributes of said objects included in said data groups that have been recognized in said recognition step (S207, S211, S215).

39. The contents identification program product according to claim 38, wherein said order of priority of said objects is the order of priority on the basis of deepness information that has been added to said objects.

40. The contents identification program product according to claim 38, wherein said order of priority of said objects is the order of priority on the basis of the order of alignment along the time series of the time for reproduction of said objects.

41. A contents reproduction program product for allowing a computer to execute a contents reproduction method for reproducing contents to which information concerning the reproduction mode has been added, which allows a computer to execute:
a switching step (S307, S311) of switching the reproduction mode of a reproduction apparatus for reproducing said contents on the basis of said information concerning said reproduction mode that has been added to said contents; and
a reproduction step (S309, S313) of reproducing said contents in said switched reproduction mode.
